# EUROPEAN PATENT APPLICATION

(11) **EP 1 187 384 A1**
(43) Date of publication of application: **13.03.2002**
(21) Application number: 00440240.0
(22) Date of filing: 07.09.2000
(51) Int. Cl.: H04L 1/00, H04L 1/18

(54) **A method for controlling the number of transmissions of a packet between a source node and a destination node in a wireless communication network**

(71) Applicant: ALCATEL, 75008 Paris (FR)
(72) Inventor: Martin, Béatrice, 75005 Paris (FR); Fratti, Marco, 78100 St. Germain en Laye (FR)
(74) Representative: Urlichs, Stefan, Dipl.-Phys.

(57) **Abstract**

The invention relates notably to a method for controlling the number of transmissions of a packet between a source node and a destination node in a wireless communication network, a radio link being located between the source node and the destination node, the packet being associated a remaining cost for conveying the packet. The method consists in decreasing the remaining cost for conveying the packet by a cost, called radio link cost, upon transmission of the packet on the radio link, the packet being discarded when the remaining cost is exhausted.

According to the invention the method further consists in dynamically updating the radio link cost according to radio-specific parameters estimated on the radio link.

## Description

The present invention relates to wireless communication networks and more precisely to a mechanism for controlling the number of packet transmissions on a radio link of a wireless communication network.

US Patent 6,028,857 discloses a wireless communication network in which each message is transmitted in a frame that includes the cost for conveying this message to a destination node and also the cost already expended in the conveying of the message. Each time the message is relayed by a relaying node on the path between the source node and the destination node, this relaying node ascertains whether its intern relaying cost is lower than the conveying cost contained in the frame. If it is the case, the node retransmits the frame after having incremented the incurred cost by the relaying cost and decremented the conveying cost by the same value. Otherwise, the node discards the message.

If the packet is discarded because the cost for conveying this message has been exhausted, the message is retransmitted from the source node with the same initial conveying cost.

The initial cost for conveying the message is determined at the source node for each message before transmission of the message. This cost is then continuously decremented depending on the relaying costs of the different relaying nodes crossed by this packet. The initial cost is usually dependent on the maximal number of relaying nodes the packet is expected to cross between its source and its destination. The relaying costs may be constant values. Preferably, they can also depend on the traffic experienced at the relaying nodes or on the distance between two nodes separated by a radio link.

A modification of the traffic amount experienced at a relaying node may modify its relaying cost. As well, a topological modification of the wireless communication network may result in a modification of the relaying costs. Indeed, if the source node moves toward the destination node, the numbers of hops between the source and the destination node may decrease, resulting in a decrease of the cost for conveying the message.

A drawback of this method is that the relaying costs are only preventing a packet from crossing a too high number of hops. The relaying costs are not connected to possible difficulties for transmitting the packet on a radio link (ie because of bad propagation conditions on the radio link) resulting in an excessive load on the radio link.

A particular object of the present invention is to provide a method for controlling the number of retransmissions of a packet over a radio link, the method preventing, in case of degraded transmission, the radio link from being cluttered with packet retransmissions, thereby further degrading the radio link quality.

Another object of the invention is to provide a packet retransmission controller adapted to perform the above mentioned method.

These objects, and others that appear below, are achieved by a method for controlling the number of transmission of a packet according to claim 1.

The present invention also concerns a packet retransmission controller according to claim 5 and source node according to claim 6.

Further advantageous features of the invention are defined in the dependent claims.

The present invention has the advantage of decreasing the number of retransmissions not to further pollute the radio link with retransmitted packets that are unlikely to be successfully received because of too poor propagation conditions.

Another advantage of the present invention, is to save network resources by preventing packets from wasting network resources when the destination node is known in advance as not reachable because of poor radio environment.

In a preferred embodiment of the method, the radio link cost for retransmitting the packet on the radio link is also dependent on the remaining cost for conveying the packet. This enables to reduce drastically the maximal number of retransmissions if the quality of the radio link is so bad that the probability for successfully transmitting the packet over the radio interface is too low.

Other characteristics and advantages of the invention will appear on reading the following description of a preferred implementation given by way of non-limiting illustrations, and from the accompanying drawings, in which:
- Figure 1 shows a radio communication system where a method according to the invention can be used;
- Figure 2 shows an implementation of the method according to the invention;
- Figure 3 shows an embodiment of a node using the method according to the invention.

In the description below, a packet retransmission usually occurs when the packet has been detected as lost because of bad propagation conditions on a radio link of the wireless communication network. A retransmission of a packet is also necessary when the packet has been discarded at a node of the wireless communication network (i.e.because of queue overflow or because a timer supervising the transmission delay of this packet has expired). It is usually the task of a radio link protocol implemented on both sides of a radio link to detect missing packets and to trigger their retransmission. When no radio link protocol is implemented, the missing frame detection/retransmission has to be performed by upper layers end-to-end.

In the description below, the term "node" of the wireless communication network refers to terminals or base stations of this network as well as to routers or switches constituting the core of this network. The term "source node" refers to the node of the wireless communication network that is at the origin of a packet. Hence, a source node may be a terminal, a base station or a router or switch. A source node may also be a mobile terminal acting as a relay between a base station and another mobile terminal in case of ODMA (Opportunity Driven Multiple Access).

The destination node is the node to which this packet is destined. In the description below it is assumed that at least a radio link is located on the path between the source node and the destination node.

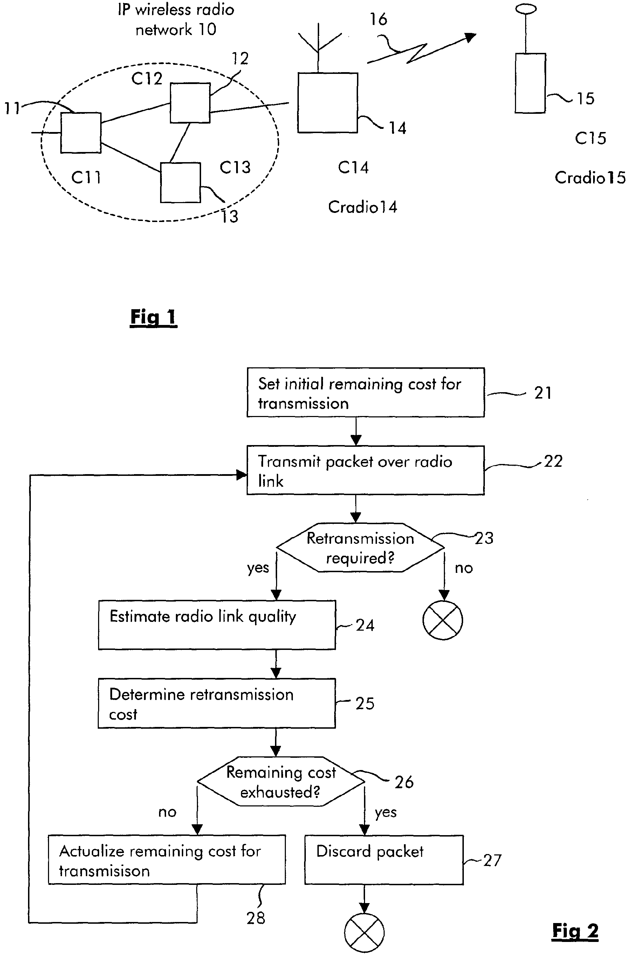

Figure 1 shows a radio communication system where a method according to the invention can be used. The radio communication network comprises routers 11, 12, 13 belonging to an IP based fixed network 10, a base station 14 and a wireless terminal 15. A radio link 16 is located between the base station 14 and the wireless terminal 15.

An incoming call received at wireless terminal 15 crosses first the IP based fixed network and then the radio link 16.

In the framework of the radio communication system described in figure 1, routers 11, 12, 13, base station 14 as well as wireless terminal 15 are considered as "nodes" of the radio communication system. For sake of illustration, a source node may be router 11 and a destination node wireless terminal 15. All possible paths followed by a packet between source node 11 and destination node 15 cross radio link 16. Examples for possible paths are router 11, router 12, base station 14, wireless terminal 15 or router 11, router 13, base station 14 and wireless terminal 15.

In IP based fixed network 10, each packet crossing the system contains a field indicating a remaining cost for conveying this packet. The remaining cost is updated each time the packet crosses a node. Preferably, this cost is initialized at the source node 11. Then, each time the packet crosses a relaying node 12, 13, 14, the cost is decremented by a relaying cost C12, C13, C14 associated to the nodes. Usually when the remaining cost for conveying the packet reaches zero before arriving at the destination node this packet is discarded.

Relaying costs C11, ..., C15 may be a constant value for example one. Preferably, more complex cost definitions may be envisaged. The cost for crossing a node may for example be dependent on the traffic experienced at this node.

According to the invention, a radio link cost is introduced at each node of the wireless communication network, responsible for transmitting a packet over a radio link. In this example, nodes 14 and 15 are concerned. They are respectively associated radio link costs Cradio14 and Cradio15. The value of radio link cost is dynamically updated and depends on the quality experienced on radio link 16 when a packet has to be retransmitted on radio link 16.

In another embodiment of the invention, the radio link cost may even be taken in account for the first transmission of the packet on radio link 16.

The present example contains then two types of costs that have been considered while transmitting a packet from the source node to the destination node: the relaying cost that is a cost internal to each relaying node 12, 13, 14 and the radio link cost that is a cost characterizing the quality of the radio link 16 and associated only to nodes 14, 15 responsible for transmitting the packets over a radio link.

The use of relaying costs is optional in the present invention. Radio link costs are the only mandatory costs in the framework of this invention. However the combination of relaying costs with radio link cost may be advantageous especially in wireless IP based communication network where relaying costs, as known by those skilled in the art, are already used in the fixed part of the communication network.

In other type of networks where the used packet format does not contain any reserved field for a remaining conveying cost. The remaining cost may be stored for each packet at the node in an appropriate table until the packet has been properly received by the destination node or until the packet has been discarded. As a consequence, it is not a requirement of the present invention that a dedicated field containing the remaining cost is present in the packets.

Once the packet reaches base station 14, according to the invention, radio link cost Cradio 14 depending on the quality of the radio channel is added to relaying cost C14 attributed to base station 14 and subtracted from the remaining cost.

Radio link costs Cradio 14, Cradio15 are preferably set according to quality criterion measured on radio link 16. Such a criterion may be the Signal to Interference Ratio (SIR) measured on the signal received at base station 14. The SIR measured on the signal received at terminal 15 and reported to base station 14 for example on a broadcast channel may also be an alternative. Other usual radio link quality indicators, known by those skilled in the art, may also be considered for estimating the current quality of radio link 16 at base station 14. Examples of further quality indicators are the error rate, the delay for transmitting the packets on the radio link and so on.

A predefined function f should preferably determine the relation between the radio link cost and the estimated radio link quality.

In a preferred embodiment of the method the radio link cost may depend on both the estimated radio link quality and the remaining cost for conveying the packet. A function g may determine the relation between the radio link cost, the estimated radio link and the current remaining cost for conveying. In a preferred embodiment, the radio link cost may be set as follows:

A quality threshold T is defined, Q is the estimated quality of the radio link before retransmission of a packet.
If Q is better than T then radio link cost =f(Q)
If Q is poorer than T then radio link cost =g(Q, remaining cost).

For example, it can be envisaged to set the radio link cost to zero if the estimated radio link quality is lower than threshold T.

In another embodiment of the invention, the radio link cost may also depend on the number of already performed retransmissions. The quality of service required for the packet may also be a parameter that could influence the radio link cost applied to the packet. Preferably, for the same radio link quality, the radio link cost should be higher for a packet requiring a low quality of service than for a packet requiring a higher quality of service.

The system shown on figure 1 is a simplified version of a wireless communication system where the method according to the invention is used. Instead of IP based fixed network 10, a system constituted by successive radio links would also be relevant for the use of the method. A radio link cost being, in such a case, associated to each of the nodes located on both sides of the radio links. Other types of fixed network 10 may be envisaged in the framework of the present invention by those skilled in the art.

Figure 2 shows an implementation of the method according to the invention. This method is applied to the transmission of a packet over a radio link at a base station or at a mobile terminal of an IP wireless radio network.

Step 21 consists in setting an initial remaining cost in a dedicated field of the packets to be transmitted. This initial remaining cost may be a predefined constant value.

Step 22 consists in transmitting the packet over the radio link.

Step 23 consists in detecting if the packet needs to be retransmitted. This detection is preferably made thanks to a radio link protocol that checks if an acknowledgement have been received for this packet or not.

If acknowledgement is received, no retransmission is necessary and the process ends.

If no acknowledgement has been received after a predefined time period, the packet is considered as not properly received by the destination node. A retransmission is necessary. Steps 24 and furthers are executed in this case only.

Steps 24 consists in estimating the radio link quality. The radio link quality may be estimated by measuring the Signal to Interference Ratio (SIR) at the source node. Alternatively a radio link quality indicator may be given by the current transmit power of the source node. The control of the current transmit power at the source node is the object of the power control in Code Division Multiple Access (CDMA) and is also, as known by those skilled in the art a good indicator on the quality of the radio link.

Step 25 consists in determining a radio link cost according to the estimated radio link quality. This relation between the estimated radio link quality and the radio link cost is preferably a decreasing function (i.e. lower radio link quality leads to a lower radio cost).

Step 26 consists in checking if the radio link cost does or not exceed the remaining cost.

If it is the case, step 27 is executed and the packet is discarded. It will be the task of upper layers to take care of the retransmission of the packet.

If the radio link cost does not exceed the remaining cost, the retransmission can be performed. Step 28 consists updating the field of the packet containing the remaining cost. The new remaining cost is equal to the previous remaining cost minus the radio link cost. Then the process loops to Step 22.

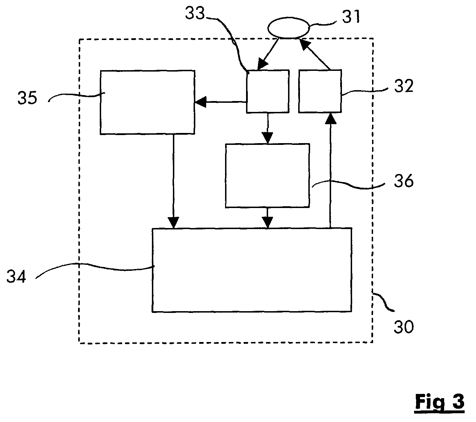

Figure 3 shows an embodiment of a node, according to the present invention, responsible for transmitting packets over a radio link. This node is preferably a base station or a terminal of a wireless communication network. The node comprises an antenna 31, an emitter 32, a receiver 33, a retransmission window 35, a packet retransmission controller 34 and a radio link quality estimator 36.

Packets to be transmitted by transmitter 32 over antenna 31 are contained in a non represented transmit queue. The transmission of the packet is mentioned in an entry of retransmission window 35.

In the present example, the node is supposed to support a radio link protocol that checks if transmitted packets are properly acknowledged by the destination on the other side of the radio link. For this purpose, acknowledgements are received by receiver 33 over antenna 31 and corresponding entries of retransmission window 35 are accordingly updated. When the radio link protocol detects in transmission window 35 a packet has been lost on the radio link, the radio link protocol triggers packet retransmission controller 34.

Radio link quality estimator 36 preferably performs radio link quality estimations on radio signals received by receiver 33 over antenna 31. The radio link quality may be estimated thanks to signal to interference ratio (SIR) measured on the received radio signals.

In case CDMA is used on the radio link, the output of power control procedure controlling the transmitting power of the node may also be used for evaluating the radio link quality. The higher the requested transmitting power of the node the poorer the radio link quality. Indeed a high transmitting power is usually the result of a high interference level on the radio link.

The radio link quality evaluated by radio link quality estimator 36 is transmitted to packet retransmission controller 34.

The packet retransmission controller 35 accesses to retransmission window 35 to read the remaining cost for conveying associated to the packet that should be retransmitted.

Packet retransmission controller 35 comprises means for calculating the radio link cost that should be applied to the packet according to the current radio link quality received from radio link quality estimator 36.

Packet retransmission controller 35 also comprises means for updating the remaining cost for conveying the packet and for discarding the packet if the radio link cost exceeds the remaining cost for conveying the packet.

## Claims

1. Method for controlling the number of transmissions of a packet between a source node and a destination node in a wireless communication network, a radio link being located between said source node and said destination node, said packet being associated a remaining cost for conveying said packet, said method comprising a step of decreasing said remaining cost by a cost, called radio link cost, upon transmission of said packet on said radio link, said packet being discarded when said remaining cost is exhausted, said method being **characterized by** further comprising a step of dynamically updating said radio link cost according to radio-specific parameters estimated on said radio link.

2. Method according to claim 1, **characterized in that** said radio link cost increases, when said radio-specific parameters estimated on said radio link have a value below a predefined threshold indicating a bad radio link quality.

3. Method according to any of the claims 1 or 2, **characterized in that** said radio link cost also depends on said remaining cost.

4. Method according to any of the claims 1 to 3, **characterized in that** said remaining cost is contained in a predefined field of said packet.

5. Packet retransmission controller for controlling the number of transmissions of a packet by a source node over a radio link of a wireless communication network, said packet retransmission controller comprising:
- means for controlling a remaining cost for conveying the packet by decreasing said remaining cost by a cost, called radio link cost, upon transmission of said packet on said radio link; and
- means for discarding said packet if said remaining cost is exhausted, said packet retransmission controller being **characterized in that** it further comprises updating means for dynamically updating said radio link cost according to radio-specific parameters estimated on said radio link.

6. Source node part of a wireless communication network dedicated to transmit a packet over a radio link to a destination node, said source node comprising a packet retransmission controller according to claim 5.

7. Source node according to claim 6, **characterized in that** it is a base station of said wireless communication network.

8. Source node according to claim 6, **characterized in that** it is a radio terminal of said wireless communication network.

9. Source node according to claim 6, **characterized in that** it is a radio terminal acting as a relay between a base station and another radio terminal.
